# EUROPÄISCHE PATENTSCHRIFT

(11) **EP 1 266 351 B1**
(45) Veröffentlichungstag und Bekanntmachung des Hinweises auf die Patenterteilung: **12.08.2009**
(21) Anmeldenummer: 01900418.3
(22) Anmeldetag: 10.01.2001
(51) Int. Cl.: G06K 19/06

(54) **MARKIERUNGSEINRICHTUNG, VERFAHREN UND VORRICHTUNG ZU DEREN HERSTELLUNG SOWIE VERFAHREN ZUM AUSLESEN EINER SOLCHEN**
MARKING DEVICE, METHOD AND APPARATUS FOR THE PRODUCTION THEREOF AND A METHOD FOR READING A MARKING DEVICE OF THIS TYPE
EQUIPEMENT DE MARQUAGE, PROCEDE ET DISPOSITIF DESTINES A SA FABRICATION, ET PROCEDE DE LECTURE D'UN TEL EQUIPEMENT DE MARQUAGE

(30) Priorität: 22.02.2000 DE 10008097
(43) Veröffentlichungstag der Anmeldung: 18.12.2002
(73) Patentinhaber: Forschungszentrum Jülich GmbH, 52425 Jülich (DE); Helmholtz-Zentrum Berlin für Materialien und Energie GmbH, 14109 Berlin (DE)
(72) Erfinder: EBERHARDT, Wolfgang, D-14169 Berlin (DE); MORENZIN, Jan, 53773 Hennef (DE); SCHONDELMAIER, Daniel, 52445 Titz-Rödingen (DE)
(74) Vertreter: Paul, Dieter-Alfred
(86) Internationale Anmeldenummer: PCT/EP2001/000247
(87) Internationale Veröffentlichungsnummer: WO 2001/063554

(56) Entgegenhaltungen:
- EP-A- 0 031 060
- DE-A- 2 405 623
- DE-C- 19 735 603
- US-A- 2 988 466
- US-A- 3 735 728
- US-A- 3 883 892
- US-A- 4 478 878
- US-A- 5 448 515

## Beschreibung

Die Erfindung betrifft eine Markierungseinrichtung für die Kennzeichnung von Objekten, mit einer Kodierung aus Bereichen mit unterschiedlichen magnetischen Eigenschaften. Sie betrifft ferner ein Verfahren zum Auslesen einer solchen Markierungseinrichtung.

Für die Markierung und damit individuelle Zuordnung und Sicherung von Scheckkarten, Kreditkarten, Zugangskarten, elektronischen Schlüsseln oder dergleichen werden vielfach magnetische Kodierungen verwendet, und zwar häufig in Form eines sogenannten Magnetstreifens. Für die Kodierung wird eine permanentmagnetische Schicht selektiv, d.h. bereichsweise derart aufmagnetisiert, daß Bereiche unterschiedlicher Magnetisierung entstehen, wobei im Sinne der vorliegenden Beschreibung auch unmagnetisierte Bereiche, also solche mit der Magnetisierung Null, gehören. Mit entsprechenden Magnetfeldsensoren kann die magnetische Signatur bzw. Kodierung erfaßt und dann entsprechend dem jeweiligen Zweck verarbeitet werden.

Es sind zahlreiche unterschiedliche Vorschläge für die Ausbildung von Magnetstreifen gemacht worden. In der US 4,650,978 werden hierzu die natürlichen zufälligen Variationen der magnetischen Eigenschaften des Magnetstreifens, verursacht durch die Variationen bezüglich Koerzitivität, Granularität, Schichtdicke, Oberflächenprofil und insbesondere durch zufällige Variationen in der Hystereseschleife und ihrer zurückliegenden magnetischen Geschichte, herangezogen. Ähnlich wird bei der Kodierung nach der US 5,616,904 und US 4,837,426 verfahren. Die magnetische Struktur wird dabei in geeigneter Form digitalisiert und zur Kennung der Objekte benutzt. Ein Nachteil besteht darin, daß die Magnetstreifen relativ einfach manipuliert werden können und unbeständig gegenüber äußeren magnetischen Feldern sind.

In den US 5,480,685 und 5,972,438 sind Magnetstreifen beschrieben, bei denen magnetische Partikel in einer Bindermatrix eingelagert sind, wobei die Magnetstreifen jeweils zwei Lagen unterschiedlicher Koerzitivität aufweisen. Auch bei dem Magnetstreifen nach der US 5,177,344 sind magnetische Partikel innerhalb einer Bindermatrix vorhanden, wobei die magnetischen Partikel durch Anlegen eines äußeren Magnetfeldes derart beeinflußt werden, daß sie magnetische Bereiche unterschiedlicher Charakteristik ergeben. Diese Art von Magnetstreifen haben den Nachteil, daß die magnetische Struktur nachträglich geändert werden kann, indem der Binder erhitzt wird und dann die magnetischen Partikel durch äußere Magnetfelder neu ausgerichtet werden.

Bei dem Magnetstreifen nach der US 5,365,586 sind eine Vielzahl von mikrokristallinen Strukturen in einem zufälligen Raster angeordnet. Der Magnetstreifen wird dann einer Sättigungsmagnetisierung unterworfen, wobei das remanente Rauschen ausgelesen und zu Identifikatiönen verwendet wird.

Auch dieser Magnetstreifen ist durch äußere Manipulation beeinflußbar.

In der US 5,254,843 werden die beim Beschreiben konventioneller Magnetbänder und -streifen entstandenen zufälligen Variationen in der zeitlichen Abfolge der Flußwechsel ausgenutzt und zur Identifikation des jeweiligen Objekts herangezogen. Auch hier ist die zufällige Struktur bei Kenntnis leicht zu reproduzieren. Außerdem erfordert das Verfahren eine Zufälligkeit der zeitlichen Variationen, welche insbesondere bei maschinellem Schreiben nicht zwingend gegeben ist.

In der nicht vorveröffentlichten WO 0030029 ist eine Markierungseinrichtung vorgeschlagen, bei der die Kodierung eine magnetische Grundschicht und eine magnetische Kodierungsschicht aufweist, welche so zusammenwirken, daß sich über die Erstreckung von Grundschicht und Kodierungsschicht Bereiche mit nichtparalleler oder antiparalleler magnetischer Kopplung ergeben. Dabei wird von dem Effekt der magnetischen zwischenschichtkopplung Gebrauch gemacht. Die Markierungseinrichtung hat den Vorteil eines sehr charakteristischen, von den üblichen magnetischen Markierungen abweichenden Verhaltens bei Anlegen von externen Magnetfeldern, was sich insbesondere darin äußert, daß zwar die nicht- oder antiparallele Kopplung unter Einfluß eines Sättigungsmagnetfeldes aufbricht, sich die ursprüngliche Magnetisierung jedoch nach Entfernung des äußeren Magnetfeldes wieder einstellt. Die Kodierung kann deshalb durch äußere Magnetfelder nicht gelöscht werden. Außerdem kann der Effekt dazu genutzt werden, beispielsweise aufgrund längerer Lagerzeit abgeschwächte oder sogar verlorengegangene magnetische Kodierungen zu reaktivieren, indem sie einem Sättigungsmagnetfeld ausgesetzt werden.

Der Erfindung liegt die Aufgabe zugrunde, eine Markierungseinrichtung der eingangs genannten Art so zu gestalten, daß die Kodierung dauerhaft, schwer zu manipulieren und unempfindlich gegen äußere Einflüsse ist. Sie sollte darüber hinaus ermöglichen, daß eine Echtheitsprüfung ohne Datenverbindung zu einem externen Rechner möglich ist.

In der US-A-3 883 892, dem nächsten Stand der Technik, ist ein Verfahren zur Herstellung von magnetischen Aufzeichnungen auf Magnetogrammträgern offenbart, wobei es Ziel dieses Verfahrens ist, dass die magnetischen Aufzeichnungen nicht unbemerkt verändert werden können. Hierzu werden die Aufzeichnungen bzw. Informationen bei einer definierten Temperatur auf das magnetische Speichermedium geschrieben, das ein magnetisierbares Material mit Austausch an Isotropie enthält, wobei das Antiferromagnetikum eine definierte Neel-Temperatur aufweist. Vor dem Einschreiben der Information weist der Magnetogrammträger gleiche magnetische Eigenschaften über die gesamte Fläche auf, d.h. es ist eine homogene Schicht vorhanden, die aus einem Ferri- oder Ferromagnetikum und einem daran angekoppelten Antiferromagnetikum besteht. Um feststellen zu können, ob eine Veränderung der gespeicherten Information stattgefunden hat bzw. versucht wurde, wird zusätzlich ein Indikator auf dem Magnetogrammträger angeordnet. Dabei ist die Hystereseschleife bei dem Magnetogrammträger zwar auf der Feldachse verschoben, jedoch immer um einen identischen Betrag.

In der EP-A-0 031 060 ist ein Verfahren zur Echtheitsprüfung einer Speicheranordnung durch zwei aufeinanderfolgende Auslesevorgänge offenbart.

Der erste Teil dieser Aufgabe wird dadurch gelöst, daß magnetische Bereiche derart unterschiedlich magnetisch voreingestellt sind, daß deren Hystereseschleifen auf der Feldstärkeachse relativ zueinander verschoben sind, wobei diese Bereiche jeweils aus einem Schichtsystem, wenigstens aufweisend eine antiferromagnetische Schicht (AFM) und wenigstens eine ferro- oder ferrimagnetische, insbesondere weichmagnetische Schicht (FM), bestehen, wobei benachbarte Bereiche eine unterschiedliche magnetische Kopplung aufweisen.

Die Beeinflussung einer solchen magnetischen Voreinstellung ist nach Abschluß der Herstellung nur noch durch Anlegen hoher Feldstärken unter gleichzeitiger Erhitzung über die kritische Néel-Temperatur möglich. Damit ist eine hohe Manipulationssicherheit gewährleistet. Versehentliche Veränderungen oder Löschungen der gespeicherten Daten sind nicht möglich. Durch Wahl geeigneter antiferromagnetischer Materialien kann die kritische Néel-Temperatur so hoch gewählt werden, daß eine Manipulation ohne Zerstörung der gespeicherten Information bzw. des Gesamtsystems praktisch nicht möglich ist.

Darüber hinaus wird mit der Erfindung die Möglichkeit eröffnet, die Markierungseinrichtung durch kombiniertes ortsaufgelöstes Auslesen der remanenten Verteilung der Magnetisierung und der Verteilung der Sättigungsmagnetisierung zu testen. Damit kann sicher unterschieden werden, ob es sich um die originale Struktur handelt oder ob eine Simulation der magnetischen Struktur vorliegt. Die Echtheitsprüfung erfolgt dabei maschinell und kann ohne die Kontrolle einer Person durchgeführt werden. Eine externe Datenverbindung zur Echtheitsprüfung ist nicht erforderlich. Damit kann die Ausleseeinheit preiswert und kompakt unter Verwendung herkömmlicher magnetischer Lesetechnologie hergestellt werden.

Grundsätzlich besteht die Möglichkeit, daß Bereiche mit magnetischer Voreinstellung beabstandet sind. Dabei können die dazwischen liegenden Bereiche unmagnetisiert sein, also eine Magnetisierung Null aufweisen, oder sie können so magnetisiert sein, daß sie nicht voreingestellt sind. Alternativ oder in Kombination dazu können jedoch auch Bereiche mit magnetischer Voreinstellung vorgesehen sein, die unterschiedlich verschobene Hystereseschleifen und/oder unterschiedliche Vorzugsrichtungen der magnetischen Voreinstellung aufweisen. Dabei kommen insbesondere Bereiche mit magnetischer Voreinstellung nach Stärke und/oder Richtung unterschiedlicher Remanenz in Frage. Soweit Bereiche mit magnetischer Voreinstellung direkt oder mit nur geringem Abstand aneinander grenzen, sollten die jeweils benachbarten Bereiche unterschiedlich verschobene Hystereseschleifen und/oder unterschiedliche Vorzugsrichtungen der Voreinstellung aufweisen.

Die magnetische Voreinstellung im vorbeschriebenen Sinn kann insbesondere dadurch hergestellt werden, daß wenigstens eine antiferromagnetische Schicht (AFM) und darüber wenigstens eine ferro- oder ferrimagnetische, insbesondere weichmagnetische Schicht (FM) aufgebracht werden, und daß durch Einwirkung eines Magnetfeldes Bereiche mit magnetischer Voreinstellung erzeugt werden, die eine Verschiebung der Hystereseschleife auf der Feldstärkeachse bewirkt. Die Einwirkung des Magnetfeldes geschieht vorzugsweise schon bei der Erzeugung der AFM- und FM-Schicht, soweit nicht in speziellen Verfahren eine Magnetfeldeinwirkung erst nach Herstellung der AFM- und FM-Schicht vorgesehen ist.

Die AFM-Schicht kann sich wenigstens über mehrere, aneinandergrenzende Bereiche mit magnetischer Voreinstellung erstrecken. Soweit die Kodierung Bereiche ohne AFM-Schicht hat, kann sich die FM-Schicht auch über diese Bereiche erstrecken.

Die antiferromagnetische Schicht (AFM) kann aus einem intrinsischen antiferromagnetischen Material, wie beispielsweise Mn sowie NiO, MnFe oder MnNi mit vorzugsweise einem Verhältnis von 50:50 Atomanteilen, MnIr vorzugsweise mit einem Verhältnis von 80:20 Atomanteilen, oder CrMnPt vorzugsweise in einem Verhältnis von 40:50:10 der Atomanteile, bestehen. Alle diese Materialien weisen eine Neel-Temperatur auf, die wesentlich über Raumtemperatur liegt, wodurch die Stabilität der magnetischen Voreinstellung gesichert ist. Die ferro- oder ferrimagnetische Schicht (FM) kann beispielsweise aus Fe, Co, Ni oder einer Legierung dieser Metalle, insbesondere aus einer weichmagnetischen Legierung wie NiFe (Permalloy) oder einer Legierung dieser Metalle mit anderen Elementen, wie beispielsweise FeAlSi oder aus einem magnetischen Metalloxid bestehen. Auf die Kombination von AFM- und FM-Schicht kann dann noch eine geeignete Schutzschicht, beispielsweise aus SiC oder DLC (diamond like carbon), aufgebracht werden.

Besonders vorteilhaft ist es, wenn die räumliche Verteilung der magnetischen Voreinstellung nicht einem gezielt strukturierten Muster entspricht, sondern zufällig erzeugt wird. Damit ist die Möglichkeit zu einer unberechtigten Reproduktion der Struktur durch die Komplexität der räumlichen Anordnung der Bereiche mit magnetischer Voreinstellung erheblich eingeschränkt.

Die Verteilung der magnetischen Voreinstellung kann sowohl in eindimensionaler Form, beispielsweise als Magnetstreifen, vorliegen, oder aber auch in einem zweidimensionalen Muster, also flächenhaft verteilt, ausgebildet sein. Zur Verbesserung der Signale kann auch ein Multischichtaufbau vorgesehen sein, d. h. eine sich wiederholende Abfolge von AFM- und FM-Schichten.

Bei der Erfindung ist es von Vorteil, wenn die magnetischen Bereiche gleich große Sättigungsmagnetisierungen aufweisen. Bei Beaufschlagung der Kodierung mit einem äußeren Magnetfeld bis in den Sättigungsbereich entsteht dann eine homogene Magnetisierung über die Erstreckung der Kodierung, das eine Referenz bildet und einen Echtheitstest ermöglicht. Es versteht sich, daß dies jedoch nicht zwingende Voraussetzung ist, denn die Sättigungsmagnetisierung kann auch über die Erstreckung der Kodierung variieren. Wenn diese Variation gespeichert ist, kann über den Echtheitetest festgestellt werden, ob eine Manipulation vorliegt oder nicht. Die Kodierung als solche ist in der Verteilung der magnetischen Voreinstellung gespeichert.

Die erfindungsgemäße Markierungseinrichtung kann dadurch hergestellt werden, daß auf einem Träger eine antiferrimagnetische Schicht (AFM) aufgebaut und darauf eine ferro- oder ferrimagnetische Schicht (FM) aufgebracht werden, wobei AFM-Schicht und FM-Schicht so aufgebaut werden, daß sich Bereiche mit magnetischer Voreinstellung ergeben. Sofern die Bereiche unmittelbar aneinandergrenzen, sollten sie unterschiedliche magnetische Voreinstellungen haben, also in unterschiedliche Richtung mit der FM-Schicht koppeln. Alternativ dazu kann vorgesehen sein, daß die AFM-Schicht auf beabstandete Bereiche beschränkt wird und darauf die FM-Schicht aufgebracht wird, wobei die FM-Schicht auch die Bereiche zwischen der AFM-Schicht abdecken kann. Dabei können die Bereiche der AFM-Schicht so aufgebaut werden, daß sie eine über alle Bereiche gleichgerichtete Voreinstellung aufweisen oder in zumindest zwei voneinander abweichenden Richtungen mit der FM-Schicht koppeln. Alternativ dazu ist vorgeschlagen, daß die AFM-Schicht in wenigstens einem Teil der Bereiche so aufgebaut wird, daß sich innerhalb eines Bereichs Bezirke unterschiedlich gerichteter magnetischer Kopplung mit der FM-Schicht ergeben.

Da die AFM- und FM-Schichten relativ dünn ausgebildet sein können, damit die beschriebenen magnetischen Wirkungen eintreten, empfiehlt es sich, für den Schichtenaufbau von der Aufdampftechnologie Gebrauch zu machen, also thermisches Aufdampfen, Aufsputtern oder dergleichen anzuwenden. Die AFM-Schicht wird dabei aus einem antiferromagnetischen Material aufgebaut, bis sie eine Dicke erreicht hat, bei der eine stabile antiferromagnetische Vorzugsrichtung und damit eine entsprechende magnetische Kopplung mit der FM-Schicht auftritt. Unterhalb dieser Mindestdicke unterbleibt eine magnetische Voreinstellung, da die antiferromagnetische Schicht (AFM) keine ortsfeste magnetische Vorzugsrichtung aufweist. Dabei dreht sich die magnetische Vorzugsrichtung der AFM-Schicht infolge der Kopplung an die ferromagnetische Schicht bei Ummagnetisierung der AFM-Schicht mit. Dies hat zur Folge, daß das Gesamtsystem eine um den Nullpunkt der H-Achse symmetrische und im Vergleich mit der FM-Schicht verbreiterte Hysteresekurve aufweist.

Zur Erhöhung der Lebensdauer der Markierungseinrichtung ist es vorteilhaft wenn auf die FM-Schicht eine Schutzschicht, insbesondere durch Aufdampfen aufgebracht wird.

Die Herstellung der AFM- und FM-Schicht sowie der Bereiche mit magnetischer Voreinstellung kann auf verschiedene Weise konkretisiert werden. So kann die Oberfläche des Trägers vor dem Aufbringen der AFM-Schicht mit Bezirken unterschiedlicher Rauhigkeit versehen werden. Dem liegt die Beobachtung zugrunde, daß die Rauhigkeit des Trägers erheblichen Einfluß auf die magnetische Kopplung der darüberliegenden. Schichten hat. Durch die entsprechende Einstellung der Rauhigkeitsverteilung kann erreicht werden, daß sich bereichsweise ein magnetisch voreingestelltes Verhalten, gekennzeichnet durch eine um den Nullpunkt der H-Achse verschobene Hysteresekurve, und Bereiche mit eher ferromagnetischem Verhalten mit wesentlich höherer Koerzivität einstellen, so daß sich in Remanenz kein eindeutiger magnetischer Zustand ergibt, sondern eine Magnetisierung des entsprechenden Bereichs möglich ist. Die Kombination der beiden Bereiche legt die zu speichernde Information und damit die Kodierung fest.

In der einfachsten Ausführung des vorbeschriebenen Verfahrens sollte die Oberfläche des Trägers mit wenigstens einem Bezirk, der eine erste Rauhigkeit aufweist, und wenigstens einem Bezirk versehen werden, der eine zweite Rauhigkeit aufweist. Dies schließt nicht aus, daß auch Bezirke mit mehr als zwei Rauhigkeiten vorgesehen werden können, um die Kodierung komplexer zu machen.

Das Verfahren läßt es zu, daß die AFM-Schicht gleichmäßig und über die gesamte Fläche des Trägers aufgetragen wird. Es besteht jedoch auch die Möglichkeit, die AFM-Schicht nur bereichsweise und auch ungleichmäßig aufzutragen, sofern hierdurch die Grundzüge des erfindungsgemäßen Verfahrens verwirklicht werden.

Die Verteilung dieser Felder bewirkt ein Muster unterschiedlicher magnetischer Eigenschaften und erlaubt es, die AFM-Schicht mit einer gleichmäßigen Schichtdicke aufzutragen. Vorzugsweise sollte auch die FM-Schicht solchen Feldern ausgesetzt werden, da hierdurch das Muster der unterschiedlichen magnetischen Eigenschaften und damit die Kodierung noch deutlicher wird. Dabei sollte die Magnetfeldverteilung und/oder die Temperaturverteilung beim Aufbau der beiden Schichten unverändert gehalten werden.

Die Herstellung und Verteilung der Bereiche mit unterschiedlichen magnetischen Eigenschaften erfolgt schon bei der Herstellung der Markierungseinrichtung.

Die vielfältigen möglichen Verfahren zur Herstellung der erfindungsgemäßen Markierungseinrichtungen lassen sich auch miteinander kombinieren. Die Verfahren und Vorrichtungen werden hierzu zwar etwas aufwendiger. Mit Hilfe solcher kombinierter Verfahren und Vorrichtungen lassen sich jedoch noch komplexere Kodierungen herstellen, wobei Zufallsgeneratoren dafür sorgen können, daß solche Kodierungen einmalig sind, ihre Nachahmung also praktisch unmöglich ist.

Gegenstand der Erfindung ist des weiteren ein Verfahren zum Auslesen der oben beschriebenen Markierungseinrichtungen mit Hilfe wenigstens eines Magnetfeldsensors, wobei die Markierungseinrichtung wenigstens zwei Auslegevorgängen unterworfen wird. Erfindungsgemäß wirken bei den Auslesevorgängen unterschiedliche Magnetfelder auf die Markierungseinrichtung ein und werden diese bei Raumtemperatur durchgeführt. Beim erstgenannten Auslesevorgang wird die in den magnetischen Bereichen gespeicherte Information ortsaufgelöst erfaßt, beispielsweise durch Auslesen der Abfolge der an den Bereichsgrenzen auftretenden Flußwechsel. Bei dem zweiten Auslesevorgang, der vorzugsweise bei Sättigungsmagnetisierung durchgeführt wird, wird die Verteilung der Sättigungsmagnetisierung erfaßt und mit einer vordefinierten Referenzstruktur verglichen. Dabei kommt es nicht auf die Reihenfolge der beiden Auslesevorgänge an.

Es ist ferner von Vorteil, daß für die Auslesung der erfindungsgemäßen Markierungseinrichtungen, übliche Magnetfeldsensoren geeignet sind, d.h. beispielsweise induktive, magneto-resistive, magneto-optische, Hall- oder SQUID-Sensoren, verwendet werden können. Die ortsaufgelöste Auslesung geschieht dabei durch Relativbewegung zwischen dem Magnetfeldsensor und der Markierungseinrichtung, wobei es nicht darauf ankommt, ob nur eine davon oder beide bewegt werden. Es können auch mehrere Magnetfeldsensoren eingesetzt werden, um die magnetische Struktur der Markierungseinrichtung in ruhendem Zustand ortsaufgelöst zu erfassen.

Zur Ermittlung der in der Kodierung gespeicherten Information kommen verschiedene Merkmale der Hystereseschleife in Frage. Einfach zu erfassen ist die Remanenz in einem Nullfeld oder einem sehr kleinen Magnetfeld. Statt dessen besteht jedoch auch die Möglichkeit, den Flußwechsel an den Grenzen zweier Bereiche zu erfassen, da bei der erfindungsgemäßen Markierungseinrichtung an den Grenzen Streufelder entstehen, deren Verteilung in einer bestimmten Richtung die Kodierung bildet.

Schließlich ist nach der Erfindung auch ein Verfahren zum Auslesen einer Markierungseinrichtung mit Hilfe eines Magnetfeldsensors vorgesehen, bei dem die Markierungseinrichtung wenigstens zwei Auslesevorgängen unterworfen wird. Erfindungsgemäß wird die Markierungseinrichtung vor dem ersten Auslesevorgang in einer Richtung und vor dem zweiten Auslesevorgang in der entgegengesetzten Richtung bis zur Sättigung magnetisiert und bei den beiden Auslesevorgängen, die bei Raumtemperatur durchgeführt werden, selbst kein Magnetfeld angelegt.

In der Zeichnung ist die Erfindung anhand von Ausführungsbeispielen näher veranschaulicht. Es zeigen:
- Figur 1: eine Draufsicht auf einen Teil einer ersten Markierungseinrichtung mit Darstellung der Hystereseschleifen von zwei magnetischen Be- reichen und des Signalverlaufs;
- Figur 2: einen Längsschnitt durch die Markierungsein- richtung gemäß Figur 1 mit Darstellung des Signalverlaufs ohne angelegtes äußeres Mag- netfeld;
- Figur 3: einen Längsschnitt durch die Markierungsein- richtung gemäß den Figuren 1 und 2 mit Dar- stellung des Signalverlaufs bei Sättigungs- magnetisierung;
- Figur 4: einen Längsschnitt durch einen Teil einer zweiten Markierungseinrichtung in Remanenz mit Darstellung der Hystereseschleifen von zwei magnetischen Bereichen;
- Figur 5: eine Prinzipdarstellung einer Markierungsein- richtung mit einem Magnetfeldsensor.

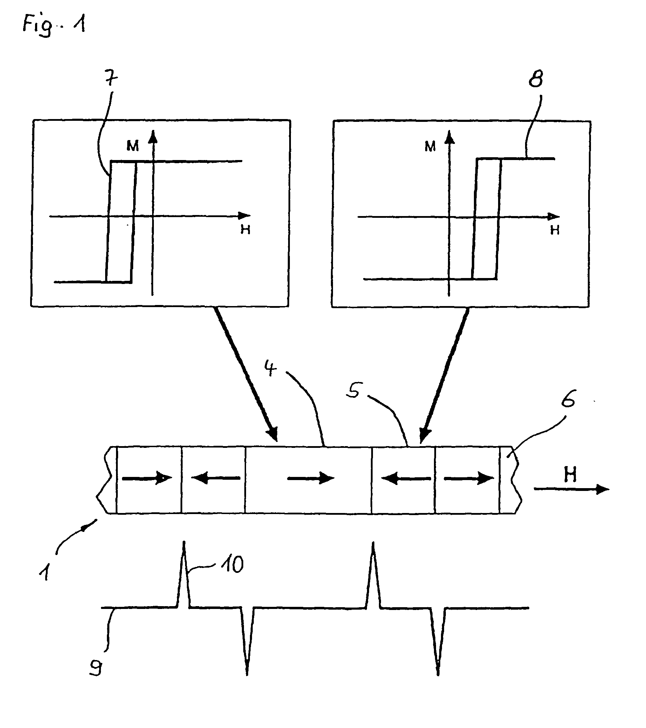

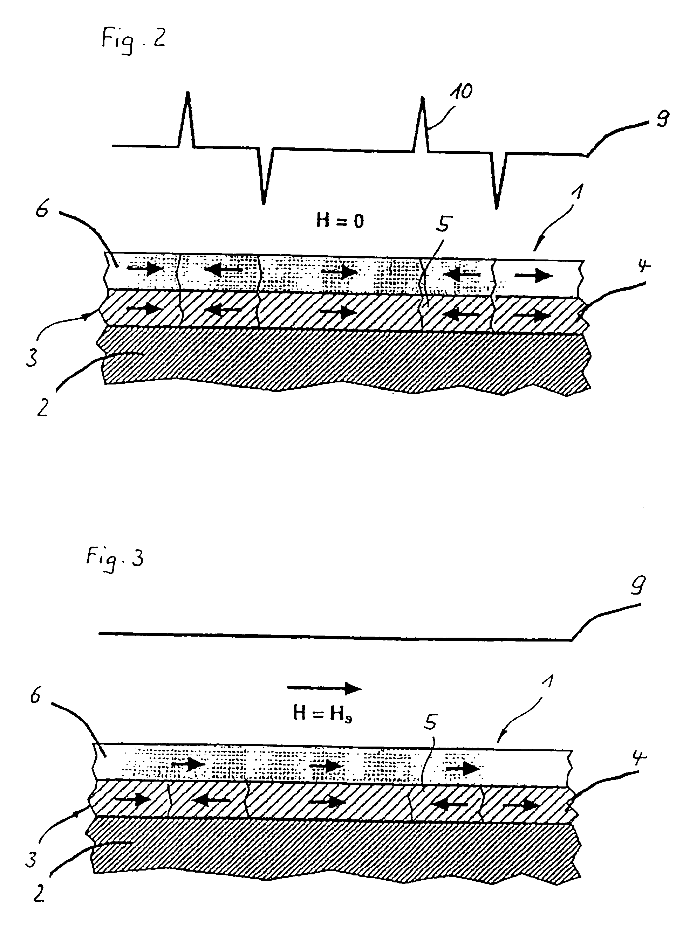

Wie die Figuren 1 und 2 zeigen, ist die Markierungseinrichtung 1 als Magnetstreifen ausgebildet, der auf einem Träger 2 aufgebracht ist. Der Träger 2 kann mit einem beliebigen Objekt verbunden werden, das mit Hilfe der Markierungseinrichtung 1 gekennzeichnet werden soll.

Die Markierungseinrichtung 1 ist zweischichtig aufgebaut, wobei die Dicke der Schichten zwischen einigen Nanometern und einigen hundert Mikrometern betragen kann. Auf dem Träger 2 ist zunächst eine antiferromagnetische Schicht (AFM) 3 aufgebracht, die aus einer Vielzahl von nebeneinander angeordneten Bereichen - beispielhaft mit 4 bzw. 5 bezeichnet - mit unterschiedlichen Richtungen der antiferromagnetischen Vorzugsachsen besteht. Auf die AFM-Schicht 3 ist eine ferromagnetische Schicht (FM) 6 aufgedampft. Die AFM-Schicht 3 ist durch die Herstellungsmethoden so ausgebildet, daß sich an der Grenzfläche zur FM-Schicht 6 magnetische Vorzugsrichtungen ergeben, die durch die Pfeile dargestellt sind. Dabei sind die Vorzugsrichtungen von jeweils zwei benachbarten magnetischen Bereichen 4, 5 entgegengesetzt. Durch die AFM-Schicht 3 wird auch in die FM-Schicht 6 jeweils eine entsprechende Vorzugsrichtung induziert, ebenfalls dargestellt durch die Pfeile in den Figuren 1 und 2. Hierdurch entsteht eine magnetische Voreinstellung der FM-Schicht 6, die sich in einer Verschiebung der Hystereseschleifen 7, 8 auf der Feldstärkeachse H manifestiert, und zwar in dem magnetischen Bereich 4 in Bezug auf die Magnetisierungsachse M nach links und in dem magnetischen Bereich 5 nach rechts.

Aufgrund der entgegengesetzten Voreinstellungen von zwei benachbarten magnetischen Bereichen 4, 5 entstehen in Remanenz an deren Grenzen magnetische Streufelder bzw. Flußwechsel, die in einem geeigneten Magnetfeldsensor ein Signal entsprechend dem unten eingezeichneten Signalverlauf 9 erzeugen. Die Signale - beispielhaft mit 10 bezeichnet - ergeben aufgrund ihrer Orientierung und Abstände eine Kodierung bildende Struktur, wenn kein äußeres Magnetfeld angelegt wird, also H = 0 ist (Figuren 1 und 2). Wird ein äußeres Magnetfeld im Sättigungsbereich (H > Hₛ) aufgeprägt, orientieren sich die magnetischen Momente der ferromagnetischen Schicht (FM) 6 in Richtung des äußeren Feldes, d.h. es entsteht in Ausleserichtung eine gleichbleibende Magnetisierung mit der Folge, daß die Signale 10 verschwinden.

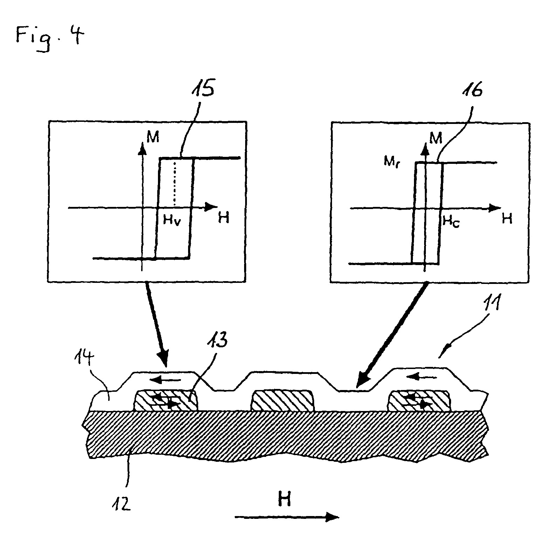

Bei der Markierungseinrichtung 11 gemäß Figur 4 sind auf einem Träger 12 beabstandete, jeweils eine AFM-Schicht bildende antiferromagnetische Bereiche - beispielhaft mit 13 bezeichnet - aufgebracht, d.h. die antiferromagnetische Schicht (AFM) bildet keine geschlossene Schicht wie bei der Markierungseinrichtung 1 gemäß den Figuren 1 bis 3. Darüber ist eine ferromagnetische Schicht (FM) 14 aufgedampft, die auch die Bereiche zwischen den antiferromagnetischen Bereichen 13 der AFM-Schicht abdeckt, also dort auf dem Träger 12 direkt aufliegt.

Im Bereich der antiferromagnetischen Bereiche 13 ergibt sich aufgrund der - in diesem Fall in allen Bereichen 13 der AFM-Schicht gleichgerichteten - Vorzugsrichtung an der Grenzfläche zu der FM-Schicht 14 eine magnetische Voreinstellung, symbolisiert durch die nach links zeigenden Pfeile, die sich durch eine Verschiebung der zugehörigen Hystereseschleife 15 auf der Feldstärkeachse H nach rechts äußert. In den Bereichen zwischen zwei antiferromagnetischen Bereichen 13 entsteht keine Spannung, d.h. hier ist eine Hystereseschleife 16 gegeben, die symmetrisch zur Magnetisierungsachse M liegt. In diesem Fall ist die Ausbildung einer räumlichen Struktur der remanenten Magnetisierung an die Richtung des Feldes gebunden, welches zur Aufmagnetisierung verwendet wird. Liegt das Feld entgegen der Vorzugsrichtung - d. h. in diesem Falle nach rechts - bis zur Sättigung vor, so ergeben sich nach Abschalten des äußeren Feldes eine Abfolge von unterschiedlich orientierten remanenten Magnetisierungen entsprechend den dargestellten Hystereseschleifen 15, 16. Magnetisiert man in der Vorzugsrichtung der magnetischen Voreinstellung bis zur Sättigung auf, so sind auch die ferromagnetischen Bereiche in Richtung der magnetischen Voreinstellung magnetisiert, und die Signatur verschwindet. Dieses Verhalten kann für eine Echtheitsprüfung verwendet werden.

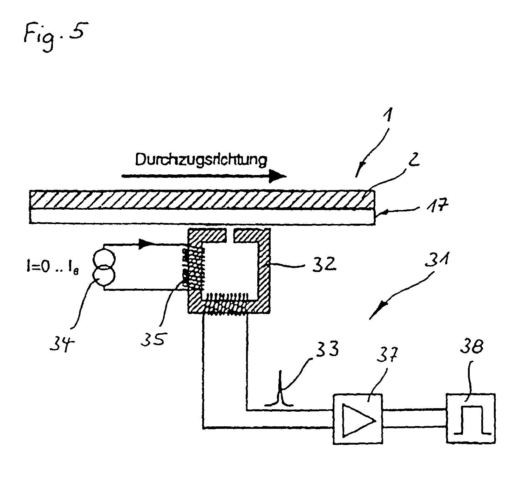

In Figur 5 ist die Markierungseinrichtung 1 umgedreht dargestellt, so daß sich der Träger 2 an der Oberseite und eine Kodierungsschicht 17, bestehend aus mindestens einer AFM-Schicht 3, bzw. **AFM-Bereichen** 13 und mindestens einer FM-Schicht 4, 14, an der Unterseite befinden. Darunter ist ein Magnetfeldsensor 31 angeordnet, der einen Lesekopf 32 aufweist, an dem die Markierungseinrichtung 1 mit dem Träger 2 und der Kodierungsschicht 17 in Durchzugsrichtung vorbeigeführt wird. An den Grenzen der im Nullfeld unterschiedlich magnetisierten Bereiche 4, 5, 13 wird ein Streufeld erzeugt, welches einen Strompuls 33 induziert. Über eine externe Stromquelle 34 kann ein zusätzlicher Strom in eine Spule 35 am Lesekopf 32 eingespeist werden, wodurch am Ort der Detektion ein äußeres Magnetfeld erzeugt wird. Das beim Auslesen entstehende Signal wird in einer Verstärkungsstufe 37 und in einer weiteren Stufe 38 verarbeitet. Ist der äußere Strom gleich Null, so können die gespeicherten Informationen gelesen werden. Ist der Strom ausreichend, um die Kodierungsschicht 17 zu sättigen, verschwinden die Strompulse 33. Damit ist eine Echtheitsprüfung der Kodierung möglich.

Besonders vorteilhaft ist es, wenn der Magnetfeldsensor 31 und die Kodierungsschicht 17 in der Form aufeinander abgestimmt sind, daß das Sättigungsfeld einer Feldstärke entspricht, bei der die Kennlinie des Magnetfeldsensors 31 linear ist, um zwischen Sättigung der Kodierung und Sättigung des Magnetfeldsensors 31 unterscheiden zu können. Eine weitere Möglichkeit zur Umgehung der Sättigungsproblematik einiger Magnetfeldsensoren, z.B. induktive oder magnetoresistive Magnetfeldsensoren, ist es, das Sättigungsfeld in einer Richtung anzulegen, die nicht dem empfindlichen Bereich des Magnetfeldsensors entspricht. Vorteilhaft ist es auch, einen Magnetfeldsensor zu verwenden, der geeignet ist, die lokale Magnetisierung der Schicht zu erfassen (z.B. magneto-optische Leseeinrichtungen), damit ein Einfluß des äußeren Feldes auf die Empfindlichkeit des Magnetfeldsensors ausgeschlossen werden kann.

## Patentansprüche

1. Markierungseinrichtung (1) für die Kennzeichnung von Objekten, mit einer Kodierung durch lateral angeordnete Bereiche (4, 5, 13) mit unterschiedlichen magnetischen Eigenschaften,
**dadurch gekennzeichnet, dass**
diese Bereiche (4, 5, 13) derart unterschiedlich magnetisch voreingestellt sind, dass deren Nystereseschleifen (7, 8, 15) auf der Feldstärkeachse (H) relativ zueinander verschoben sind, wobei diese Bereiche (4, 5, 13) jeweils aus einem Schichtsystem, wenigstens aufweisend eine antiferromagnetische Schicht (3, 13) und wenigstens eine ferro- oder ferrimagnetische, insbesondere weichmagnetische Schicht (6, 14), bestehen, wobei benachbarte Bereiche eine unterschiedliche magnetische Kopplung aufweisen.

2. Markierungseinrichtung nach Anspruch 1,
**dadurch gekennzeichnet, dass**
Bereiche (13) mit magnetischer Voreinstellung untereinander beabstandet sind.

3. Markierungseinrichtung nach Anspruch 2,
**dadurch gekennzeichnet, dass**
zwischen den Bereichen mit magnetischer Voreinstellung (13) Bereiche angeordnet sind, die nicht voreingestellt sind.

4. Markierungseinrichtung nach Anspruch 1,
**dadurch gekennzeichnet, dass**
Bereiche (4, 5) mit unterschiedlicher magnetischer Voreinstellung aneinandergrenzen.

5. Markierungseinrichtung nach Anspruch 2,
**dadurch gekennzeichnet, dass**
sich die ferro- oder ferrimagnetische Schicht (14) auch über Bereiche erstreckt, die nicht magnetisch voreingestellt sind.

6. Markierungseinrichtung nach den Ansprüchen 1 oder 2 und 5,
**dadurch gekennzeichnet, dass**
die antiferromagnetische Schicht (3, 13) aus einzelnen übereinandergelegten ferro- bzw, ferrimagnetischen und/oder unmagnetischen Teilschichten derart zusammengesetzt ist, dass sie nichtparallel, insbesondere antiparallel koppeln.

7. Markierungseinrichtung nach den Ansprüchen 1 oder 2 und 5,
**dadurch gekennzeichnet, dass**
die Bereiche (4, 5, 13) der antiferromagnetischen Schicht (3, 13) so aufgebaut werden, dass sie in zumindest zwei voneinander abweichenden Richtungen mit der ferro- oder ferrimagnetischen Schicht (6, 14) koppeln.

8. Markierungseinrichtung nach einem der Ansprüche 1 bis 8,
**dadurch gekennzeichnet, dass**
das Schichtsystem aus der antiferromagnetischen Schicht (3, 13) und der ferro- bzw. ferrimagnetischen Schicht (6, 14) mit einer Schutzschicht abgedeckt ist.

9. Markierungseinrichtung nach Anspruch 1,
**dadurch gekennzeichnet, dass**
zumindest bereichsweise zwischen der antiferromagnetischen Schicht (3, 13) und der ferro- bzw. ferrimagnetischen Schicht (6, 14) eine zusätzliche Schicht angeordnet ist.

10. Markierungseinrichtung nach einem der Ansprüche 1 bis 10,
**dadurch gekennzeichnet, dass**
die Schichtstruktur aus antiferromagnetischer Schicht (3, 13) und/oder ferro- bzw. ferrimagnetischen Schicht (4, 14) auf einem glatten oder strukturierten Träger (2, 12) insbesondere aus nichtmagnetischem Material angeordnet ist.

11. Verfahren zum Auslesen einer Markierungseinrichtung nach einem der Ansprüche 1 bis 10, mit Hilfe eines Magnetfeldsensors (31), wobei die Markierungseinrichtung (1) wenigstens zwei Auslesevorgarigen unterworfen wird,
**dadurch gekennzeichnet, dass**,
bei den Auslesevorgängen unterschiedliche Magnetfelder auf die Markierungseinrichtung einwirken und diese bei Raumtemperatur durchgeführt werden.

12. Verfahren zum Auslesen einer Markierungseinrichtung nach Anspruch 11,
**dadurch gekennzeichnet, dass**,
ein Auslesevorgang unter Einwirkung eines Magnetfeldes und ein anderer Auslesevorgang ohne Anlegen eines Magnetfeldes erfolgen.

13. Verfahren zum Auslesen einer Markierungseinrichtung nach Anspruch 11,
**dadurch gekennzeichnet, dass**,
bei dem einen Auslesevorgang ein Magnetfeld in einer Richtung und bei dem anderen Auslesevorgang ein Magnetfeld in der entgegengesetzten Richtung angelegt wird.

14. Verfahren zum Auslesen einer Markierungseinrichtung nach einem der Ansprüche 1 bis 10, mit Hilfe eines Magnetfeldsensors (31), wobei die Markierungseinrichtung (1) wenigstens zwei Auslesevorgängen unterworfen wird,
**dadurch gekennzeichnet, dass**,
die Markierungseinrichtung (1) vor dem ersten Auslesevorgang in einer Richtung und vor dem zweiten Auslesevorgang in der entgegengesetzten Richtung bis zur Sättigung magnetisiert wird und bei den beiden Auslesevorgängen, die bei Raumtemperatur durchgeführt werden, selbst kein Magnetfeld angelegt wird.

## Claims

1. A marking device (1, 11) for the identification of objects with a coding by laterally arranged regions (4, 5, 13) with different magnetic characteristics, **characterized in that** these regions (4, 5, 13) are magnetically biased in a different way such their hysteresis loops (7, 8, 15) are shifted on the field strength axis (H) relative to each other, wherein these regions (4, 5, 13) consist of a layer system comprising at least one antiferromagnetic first layer (3, 13) and at least one ferromagnetic or ferrimagnetic, especially soft magnetic, layer (6, 14), neighboring regions having a different magnetic coupling.

2. Marking device according to claim 1, **characterized in that** the regions (13) with magnetic bias are spaced apart from each other.

3. Marking device according to claim 2, **characterized in that** between the regions with magnetic bias (13) are provided regions, which are not biased.

4. Marking device according to claim 1, **characterized in that** regions (4, 5) with different magnetic bias border one another.

5. Marking device according to claim 2, **characterized in that** the ferromagnetic or ferrimagnetic layer (14) also extends over regions, which are not magnetically biased.

6. Marking device according to claims 1 or 2 and 5, **characterized in that** the first layer (3, 13) is so assembled from superimposed ferromagnetic or ferrimagnetic and/or unmagnetic partial layers, that they couple in a nonparallel, especially antiparallel manner.

7. Marking device according to claims 1 or 2 and 5, **characterized in that** the regions (4, 5, 13) of the antiferromagnetic layer (3, 13) are so formed, that they couple in at least two mutually deviating directions with the ferromagnetic or ferrimagnetic layer (6, 14).

8. Marking device according to any of the claims 1 to 8, **characterized in that** the layer system comprising the antiferromagnetic layer (3, 13) and the ferromagnetic or ferrimagnetic layer (6, 14) is covered with a protective layer.

9. Marking device according to claim 1, **characterized in that** at least partially between the antiferromagnetic layer (3, 13) and the ferromagnetic or ferrimagnetic layer (6, 14) an additional layer is provided.

10. Marking device according to any of the claims 1 to 9, **characterized in that** the layer structure comprising the antiferromagnetic layer (3, 13) and/or the ferromagnetic or ferrimagnetic layer (6, 14) is provided on a smooth or a structured carrier (2, 12) in particular of an nonmagnetic material.

11. Method of reading out a marking device according to any of the claims 1 to 10 with the aid of a magnetic field sensor (31), wherein the marking device (1) is subject to at least two readout processes, **characterized in that** during the readout processes different magnetic fields act on the marking device, and they are carried out at room temperature.

12. Method for reading out a marking device according to claim 11, **characterized in that** one readout process is carried out under the influence of a magnetic field and another readout process without applying a magnetic field.

13. Method for reading out a marking device according to claim 11, **characterized in that** during one readout process a magnetic field in one direction and during the other readout process a magnetic field in the opposite direction is applied.

14. Method for reading out a marking device according to any of the claims 1 to 10 with the aid of a magnetic field sensor (31), wherein the marking device (1) is subjected to at least two readout processes, **characterized in that** the marking device is magnetized up to saturation in one direction before the first readout process and in the opposite direction before the second readout process and during the readout processes, which are carried out at room temperature, no magnetic field is applied.

## Revendications

1. Dispositif de marquage (1) pour l'identification d'objets, comprenant un codage au moyen de zones (4, 5, 13) disposées latéralement et possédant des propriétés magnétiques différentes, **caractérisé en ce que** ces zones (4, 5, 13) sont préréglées magnétiquement différemment de manière que leurs boucles d'hystérésis (7, 8, 15) soient décalées les unes par rapport aux autres sur l'axe d'intensité du champ (H), ces zones (4, 5, 13) étant composées chaque fois d'un système de couches présentant au moins une couche antiferromagnétique (3, 13) et au moins une couche ferro- ou ferrimagnétique en particulier magnétiquement douce (6, 14), des zones adjacentes présentant un couplage magnétique différent.

2. Dispositif de marquage selon la revendication 1, **caractérisé en ce que** des zones (13) avec préréglage magnétique sont espacées les unes des autres.

3. Dispositif de marquage selon la revendication 2, **caractérisé en ce qu'**entre les zones avec préréglage magnétique (13) sont disposées des zones qui ne sont pas préréglées.

4. Dispositif de marquage selon la revendication 1, **caractérisé en ce que** des zones (4, 5) avec préréglage magnétique différent sont contiguës.

5. Dispositif de marquage selon la revendication 2, **caractérisé en ce que** la couche ferro- ou ferrimagnétique (14) s'étend aussi sur des zones qui ne sont pas préréglées magnétiquement.

6. Dispositif de marquage selon les revendications 1 ou 2 et 5, **caractérisé en ce que** la couche antiferromagnétique (3, 13) est composée de différentes couches partielles ferro- ou ferrimagnétiques et/ou amagnétiques superposées de telle manière qu'elles soient couplées de manière non parallèle, en particulier antiparallèlement.

7. Dispositif de marquage selon les revendications 1 ou 2 et 5, **caractérisé en ce que** les zones (4, 5, 13) de la couche antiferromagnétique (3, 13) sont structurées de manière à produire un couplage avec la couche ferro- ou ferrimagnétique (6, 14) dans au moins deux directions différentes l'une de l'autre.

8. Dispositif de marquage selon l'une des revendications 1 à 8, **caractérisé en ce que** le système de couches composé de la couche antiferromagnétique (3, 13) et de la couche ferro- ou ferrimagnétique (6, 14) est recouvert d'une couche de protection.

9. Dispositif de marquage selon la revendication 1, **caractérisé en ce qu'**une couche supplémentaire est disposée au moins par endroits entre la couche antiferromagnétique (3, 13) et la couche ferro- ou ferrimagnétique (6, 14).

10. Dispositif de marquage selon l'une des revendications 1 à 10, **caractérisé en ce que** la structure de couches composée de la couche antiferromagnétique (3, 13) et/ou de la couche ferro- ou ferrimagnétique (4, 14) est disposée sur un support (2, 12) lisse ou structuré, en particulier en matériau amagnétique.

11. Procédé pour lire un dispositif de marquage selon l'une des revendications 1 à 10 à l'aide d'un capteur de champ magnétique (31), le dispositif de marquage (1) étant soumis à au moins deux opérations de lecture, **caractérisé en ce que** des champs magnétiques différents agissent sur le dispositif de marquage lors des opérations de lecture et que celles-ci sont effectuées à température ambiante.

12. Procédé pour lire un dispositif de marquage selon la revendication 11, **caractérisé en ce qu'**une opération de lecture a lieu sous l'influence d'un champ magnétique et une autre opération de lecture sans application d'un champ magnétique.

13. Procédé pour lire un dispositif de marquage selon la revendication 11, **caractérisé en ce que** lors d'une opération de lecture un champ magnétique est appliqué dans une direction et lors de l'autre opération de lecture un champ magnétique est appliqué dans la direction opposée.

14. Procédé pour lire un dispositif de marquage selon l'une des revendications 1 à 10 à l'aide d'un capteur de champ magnétique (31), le dispositif de marquage (1) étant soumis à au moins deux opérations de lecture, **caractérisé en ce que** le dispositif de marquage (1) est magnétisé jusqu'à la saturation dans une direction avant la première opération de lecture et dans la direction opposée avant la deuxième opération de lecture et que lors des deux opérations de lecture elles-mêmes, qui sont effectuées à température ambiante, aucun champ magnétique n'est appliqué.
